# EUROPÄISCHE PATENTSCHRIFT

(11) **EP 2 163 337 B1**
(45) Veröffentlichungstag und Bekanntmachung des Hinweises auf die Patenterteilung: **24.07.2013**
(21) Anmeldenummer: 08105326.6
(22) Anmeldetag: 12.09.2008
(51) Int. Cl.: B23K 9/10

(54) **Schweiß- oder Lötvorrichtung mit Verbrauchsreduzierung**
Welding or soldering device with consumption reduction
Dispositif de soudage ou de brasage à consommation réduite

(43) Veröffentlichungstag der Anmeldung: 17.03.2010
(73) Patentinhaber: EWM Hightec Welding GmbH, 56271 Mündersbach (DE)
(72) Erfinder: Szczesny, Michael, 56235 Ransbach-Baumbach (DE)
(74) Vertreter: Cohausz & Florack

(56) Entgegenhaltungen:
- EP-A- 1 420 619
- EP-A- 1 586 403
- US-A- 4 450 340
- US-A1- 2002 190 044
- US-A1- 2003 066 823

## Beschreibung

Die vorliegende Erfindung bezieht sich auf eine Vorrichtung zum Schweißen oder Löten von Werkstücken mit einem versorgungsspannungsgespeisten Leistungsteil zur Energiebeaufschlagung des Schweiß- oder Lötprozesses, einer Steuerungseinheit für das Leistungsteil und mit mindestens einer externen Komponente. Dabei ist mindestens ein steuerbares Schaltmittel vorgesehen ist, mit dem die mindestens eine externe Komponente von einem ersten Zustand in einen gegenüber dem ersten Zustand hinsichtlich des Energieverbrauchs reduzierten zweiten Zustand umschaltbar ist. Dem mindestens einen Schaltmittel ist ein Detektormittel zur Erfassung des Verbrauchs einer elektrischen Größe, insbesondere Strom, Spannung oder Leistung, der mindestens einen externen Komponente zugeordnet. Die Ansteuerung des mindestens einen Schaltmittels erfolgt beim Erreichen einer vorgebbaren Bedingung bezüglich des Energieverbrauchs der mindestens einen externen Komponente. Dabei gehört die mindestens eine externe Komponente zur Menge der folgenden externen Komponenten: Drahtvorschubeinrichtung, Schweißbrenner, Lüfter, Kühlwasserpumpe.

Vorrichtungen zum Schweißen oder Löten von Werkstücken sind aus der Praxis bekannt. Zentraler Bestandteil einer solchen Vorrichtung ist ein Leistungsteil, welches zur Energiebeaufschlagung des Schweiß- oder Lötprozesses dient. Die erforderliche elektrische Leistung wird eingangsseitig vom Leistungsteil entweder aus der Netzspannung oder einer anderen Versorgungsspannung aufgenommen. Zur elektrischen bzw. elektronischen Steuerung des Leistungsteils dient die Steuerungseinheit, welche über eine geeignete Bedienoberfläche verfügt, über die der Benutzer die entsprechenden Funktionen der Vorrichtung einstellen kann. Bei modernen Schweiß- oder Lötvorrichtungen erfolgt die Steuerung größtenteils über Softwareprogramme, die von der Bedienungsperson aufgerufen oder automatisch ausgewählt werden können. Den beschriebenen Komponenten sind externe Komponenten zugeordnet, beispielsweise der Schweißbrenner, die Zuführungseinrichtung für den Schweißdraht, oder entsprechende Lüftungs- oder Kühlungsaggregate.

Alle beschriebenen internen bzw. externen Komponenten weisen zur Erfüllung ihrer Funktionen einen bestimmten Energiebedarf auf.

Die US 2002/0190044 A1 offenbart die Steuerung der Geschwindigkeit des Motors eines Schweißgenerators. Der Motor ist zwischen zwei Geschwindigkeiten umschaltbar: Einerseits kann er mit einer Leerlaufgeschwindigkeit laufen, andererseits kann er mit einer Arbeitsgeschwindigkeit laufen. Die Arbeitsgeschwindigkeit wird dann angenommen, wenn eine an den Schweißgenerator angeschlossene Last einen Laststrom oberhalb einer bestimmten Größe aufnimmt.

Die EP 1 586 403 A1 lehrt ein Schweißgerät, welches neben einer Stromquelle und einem Schweißbrenner eine Drahtfördervorrichtung enthält. Erfolgt keine Schweißung, wird von der Stromquelle eine reduzierte Leistung bereit gestellt, so dass sich die Drahtfördervorrichtung in einem Standby-Modus befindet. Wird jedoch ein Brennertaster am Schweißbrenner betätigt, wird von der Drahtfördervorrichtung ein Signal an die Stromquelle übertragen. Daraufhin stellt die Stromquelle die erhöhte, zum Schweißen benötigte Leistung bereit. Die Drahtfördervorrichtung zapft diese von der Stromquelle bereit gestellte Leistung an und nimmt das Fördern des Drahts auf.

Die EP 1 420 619 A2 hat sich zum Ziel gesetzt, die beim Zünden des Lichtbogens beim Plasmaschweißen auftretende Elektrodenerosion zu minimieren. Dazu ist vorgesehen, dass der Schweißbrenner zwischen einem Arbeitsmodus und einem Standby-Modus, der zwischen Füge- oder Schneidvorgängen eingenommen werden kann, umschaltbar ist. In dem Standby-Modus erstreckt sich der Lichtbogen lediglich zwischen der Elektrode und der Brennerdüse. Zudem ist der Lichtbogenstrom reduziert und es erfolgt eine Anpassung zumindest eines Flussparameters des Plasmagases, zum Beispiel der Durchflussmenge. Neben einem Arbeitslichtbogen und einem Standby-Lichtbogen, kann das Plasmaschweißgerät für den Zündvorgang einen Pilotlichtbogen erzeugen. Zur Steuerung des Lichtbogens in Arbeits-, Standby- und Pilotmodus ist eine Leistungssteuereinheit vorgesehen, die drei unterschiedliche Stromquellen ansteuert, von denen jede für einen bestimmten dieser Modi vorgesehen ist.

Die US 4,450,340 lehrt ein Lichtbogenschweißgerät, welches Mittel enthält, um die Leerlaufspannung zu reduzieren, wenn gerade keine Schweißung durchgeführt wird. Diese reduzierte Spannung wird beibehalten, bis eine Lichtbogenzündung detektiert wird. Die Detektion der Lichtbogenzündung löst eine Rückkehr zu der erhöhten Normalspannung aus. Für die Detektion der Lichtbogenzündung enthält der Schweißtransformator eine entsprechende Schaltung. Die Reduktion der Leerlaufspannung erfolgt durch ein auf der Seite des Leistungsteils angeordnetes Schaltmittel. Eine entsprechende Lehre ist auch der US 2003/0066823 A1 zu entnehmen.

Gegenüber dem Stand der Technik liegt der vorliegenden Erfindung die Aufgabe zugrunde, eine Vorrichtung zum Schweißen oder Löten von Werkstücken sowie ein Verfahren zum Betreiben eines Schweiß- oder Lötgerätes anzugeben, die es ermöglichen, unkompliziert und nachrüstbar den Energieverbrauch der Schweiß bzw. Lötvorrichtung zu reduzieren.

Diese Aufgabe wird erfindungsgemäß bei einer Vorrichtung der eingangs genannten Art sowie bei einem Verfahren zum Betreiben eines solchen Schweiß- oder Lötgerätes gemäß dem Oberbegriff des Patentanspruchs 10 dadurch gelöst, dass das mindestens eine Schaltmittel der mindestens einen externen Komponente zugeordnet ist.

Die vorliegende Erfindung zeichnet sich dadurch aus, dass mindestens einzelne der Komponenten der Schweiß- oder Lötvorrichtung dauerhaft oder zeitweise in einem energiesparenderen Modus betrieben werden. Dabei wird die Besonderheit des Schweiß- oder Lötverfahrens, insbesondere bei dessen manueller Durchführung, ausgenutzt, dass während des Schweiß- oder Lötprozesses immer wieder Pausen oder Unterbrechungen eintreten. Bei herkömmlichen Schweißgeräten werden sämtliche Komponenten auch während der Pausen oder Unterbrechungen mit der vollen Energie betrieben. Gemäß der Erfindung ist nun vorgesehen, dass diejenigen Komponenten, deren Energiebeaufschlagung derzeit nicht benötigt wird, teilsweise oder ganz abgeschaltet werden. Hierdurch werden die Kosten für die Energieversorgung des gesamten Schweiß- oder Lötsystems erheblich reduziert. Ein weiterer Vorteil besteht darin, dass die Wartungsintervalle für die Schweiß- oder Lötvorrichtung erheblich verlängert werden können, da die einzelnen Komponenten durch die ganze oder teilweise Abschaltung hinsichtlich ihrer Betriebsdauer verlängert werden.

Die Ansteuerung des mindestens einen steuerbaren Schaltmittels erfolgt erfindungsgemäß automatisch und zwar dann, wenn eine Vorgabebedingung bezüglich des Energieverbrauchs erfüllt ist. Die Vorgabebedingung wird dabei gemessen an einem dem Schaltmittel zugeordneten Detektormittel, welches den Verbrauch einer elektrischen Größe, insbesondere Strom, Spannung oder Leistung, von einer der Baugruppen überwacht. Wenn ein von einem Diskriminatormittel vorgebbarer Schwellenwert überschritten wird, d.h. wenn die Vorgabebedingung erreicht wird, schaltet das steuerbare Schaltmittel die ihm zugeordnete mindestens eine Komponente in den hinsichtlich des Energieverbrauchs reduzierten zweiten Zustand.

Die Betätigung kann dabei entweder sofort nach Erreichen des Schwellenwertes für die Vorgabebedingung erfolgen oder aber nach Ablauf einer vorbestimmten Zeit. Hierzu ist dem mindestens einem Schaltmittel ein Verzögerungsglied zugeordnet, nach dessen Ablauf die Betätigung erfolgt. Die Verzögerungszeit kann dabei entweder fest vorgegeben oder von einer Bedienungsperson eingestellt werden.

Die Rückkehr vom zweiten Zustand in den ersten Zustand kann bei dieser ersten Variante der Erfindung ebenfalls automatisch erfolgen, beispielsweise bei Unterschreiten des Schwellenwertes.

Zusätzlich kann vorgesehen sein, dass durch Betätigung eines Betätigungsschalters der Schweißvorrichtung, z.B. der Schweißbrennertaste, eine Ansteuerung des mindestens einen steuerbaren Schaltmittels zum Wechsel vom ersten in den zweiten Zustand und/oder zum Wechsel vom zweiten Zustand in den ersten Zustand erzielt werden kann. Dieser Wechsel kann wiederum mit einer Zeitverzögerung bezüglich des Betätigungszeitpunktes der Betätigungstaste, oder sofort erfolgen. Die Zeitverzögerung kann wiederum einstellbar sein.

Eine bevorzugte Ausführungsform der Erfindung sieht vor, dass der erste Zustand der Betriebszustand und der zweite Zustand der Standby-Modus ist. Auf diese Weise kann während der Pausen bzw. Unterbrechungszeiten der Schweiß- oder Lötvorrichtung die jeweilige Komponente oder sogar sämtliche Komponenten der Vorrichtung vom Betriebszustand in den Standby-Modus überwechseln, so dass sich eine entsprechende Energieersparnis ergibt.

Eine andere Möglichkeit sieht hierzu vor, dass der erste Zustand der Betriebszustand und der zweite Zustand der abgeschaltete Zustand ist. Hierdurch ergibt sich eine noch weiter verbesserte Energieeinsparung, da im abgeschalteten Zustand noch weitere Bauelemente keine Leistung konsumieren im Vergleich zum Standby-Modus.

Die Erfindung lässt sich anwenden auf sämtliche externen Komponenten einer Schweiß- oder Lötvorrichtung, wie zum Beispiel Schweißbrenner, Lüfter, Kühlwasserpumpe der Schweiß- oder Lötvorrichtung.

Eine weitere vorteilhafte Lösung sieht vor, dass dem steuerbaren Schaltmittel ein Anzeigemittel für den aktuellen Zustand der Vorrichtung zugeordnet ist. Hierüber lässt sich der aktuell eingestellte Zustand für die Bedienungsperson einfacher sichtbar oder hörbar machen. Die Bedienungsperson kann dann einschreiten, wenn eine Fehlfunktion eintritt, d.h. kein Übergang in den Standby- oder abgeschalteten Modus erfolgt, obwohl dies aufgrund einer Pause oder Unterbrechung des Schweiß- oder Lötprozesses gewollt wäre.

Die Erfindung wird im Folgenden anhand einer ein Ausführungsbeispiel darstellenden Zeichnung näher erläutert:
Dabei zeigen
   Figur 1 ein Blockschaltbild der elektrischen/elektronischen Komponenten eines Schweißgerätes gemäß dem Ausführungsbeispiel der Erfindung;
   Figur 2 ein Schaltmittel, wie es in dem Ausführungsbeispiel nach Figur 1 Verwendung findet;

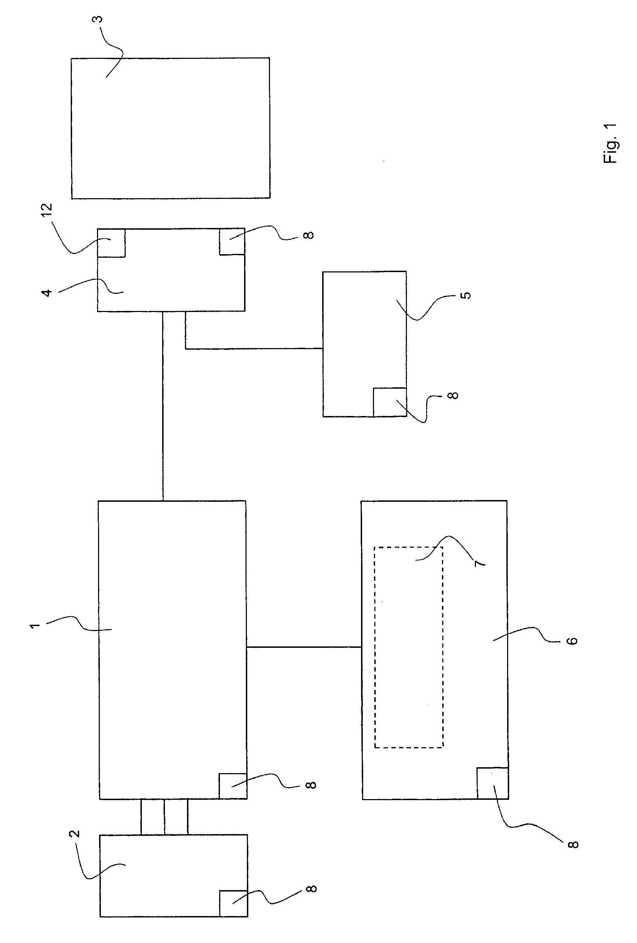

Figur 1 zeigt eine Schweißvorrichtung, welche ein Leistungsteil 1 aufweist, welches von einer Netzspannungsversorgung 2 aus gespeist wird und zur Versorgung eines Schweißprozesses 3 dient. Hierzu ist am Leistungsteil 1 ein Schweißbrenner 4 als externe Komponente angeschlossen. Eine weitere externe Komponente wird durch eine Kühlvorrichtung 5 gebildet, welche insbesondere eine Kühlwasserpumpe ist.

Die elektrische Steuerung des Leistungsteils 1 wird von einer Steuerungseinheit 6 vorgenommen, mittels der auch die Steuerung sämtlicher externen Komponenten erfolgt. Weitere solche externen Komponenten können sein eine Drahtvorschubeinrichtung oder ein Lüfter. An der Steuerungseinheit 6 ist eine Bedienoberfläche 7 angebracht, über die die Bedienungsperson die Steuerung vornehmen kann.

Im Betrieb arbeiten sämtliche der beschriebenen Komponenten in bekannter Weise zur Durchführung des Schweißvorganges zusammen.

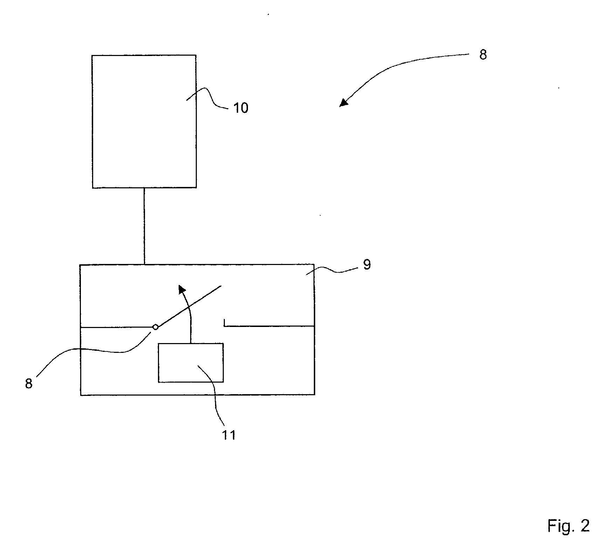

Jede der beschriebenen Komponenten weist ein steuerbares Schaltmittel 8 auf, welches die Aufgabe hat, eine einzelne Komponente, Gruppen von Komponenten oder sämtliche Komponenten der Schweißvorrichtung aus ihrem normalen Betriebszustand in einen energieeinsparenderen Modus zu überführen. Hierzu weist das steuerbare Schaltmittel 8 ein Detektormittel 9 auf (vgl. Fig. 2), welches eine Diskriminatorschaltung enthält, mittels der festgestellt wird, welcher elektrische Strom bzw. welche elektrische Spannung bzw. welche elektrische Leistung von der jeweiligen Komponente konsumiert wird. Die Einstellung der Ansprechschwelle eines solchen Diskriminatormittels kann variabel jeder einzelnen Komponente vorgegeben werden. Jedem steuerbaren Schaltmittel 8 ist eine Anzeigeeinheit 10 zugeordnet, welche den jeweiligen Zustand der Komponente anzeigt, in der sich das steuerbare Schaltmittel 8 befindet. Als Zustand kommen in Frage der normale Betriebszustand, der Standby-Zustand und der abgeschaltete Zustand der jeweiligen Komponenten.

Darüber hinaus kann jedem steuerbaren Schaltmittel 8 auch ein Verzögerungsglied 11 zugeordnet sein, welches den nach Erreichen des Schwellwertes gewünschten nachfolgenden Zustand um eine vorgebbare Zeitdauer verzögert. Diese Zeitdauer kann entweder fest eingestellt sein oder von einer Bedienungsperson vorgegeben werden.

Die erfindungsgemäße Vorrichtung arbeitet wie folgt:
Im normalen Prozessablauf des Schweißprozesses arbeitet jede der beschriebenen Komponenten, sowohl die "internen" als auch die externen Komponenten, in ihrem normalen Betriebszustand. Erfolgt nun eine Pause bzw. eine Unterbrechung des Schweißprozesses, so wird mittels des Detektormittels 9 eine veränderte Stromaufnahme einer der Komponenten festgestellt. Es erfolgt dann entweder sofort oder nach Ablauf der vorgegebenen Verzögerungszeit T ein Übergang in den Standby-Modus bzw. in den abgeschalteten Modus.

Sobald die vorgegebene Schwelle wieder unterschritten ist, stellt das Diskriminatormittel 9 fest, dass nunmehr wieder der Betriebszustand erreicht werden soll und das Schaltmittel 8 wird wiederum entweder sofort oder nach Ablauf einer Verzögerungszeit vom Standby-Modus bzw. abgeschalteten Zustand in den Betriebszustand zurückversetzt, so dass ein normaler Betrieb gewährleistet ist. Diese beschriebene Umschaltung zwischen den Betriebszuständen erfolgt voll automatisch. Es können dabei hinsichtlich ihrer Wirkung mehrere Komponenten miteinander gekoppelt sein oder aber die Umschaltung für jede einzelne Komponente oder sogar für jede einzelne Baugruppe innerhalb einer Komponente unabhängig voneinander erfolgen.

Es ist auch vorgesehen, dass in Ergänzung zu der automatischen Ansteuerung des steuerbaren Schaltmittels 8 eine manuelle Steuerung durch die Bedienungsperson an jeder einzelnen Komponente ermöglicht wird. So wird erreicht, dass zwischen den einzelnen Zuständen auch manuell durch Betätigung eines Betätigungsschalters hin- und hergewechselt werden kann. Insbesondere kann beispielsweise mittels der Schweißbrennertaste, oder einer anderen, beispielsweise an einer externen Komponente angebrachten Taste, der jeweilige gewünschte Zustand besonders einfach erreicht werden.

Jeweils der bei der einzelnen Komponente oder der einzelnen Baugruppe geltende Zustand wird dabei über die Anzeige 10 des jeweiligen Schaltmittels 8 symbolisiert.

Durch die erfindungsgemäße Lösung wird erreicht, dass die Energie bzw. der Stromverbrauch einer Schweiß- und/oder Lötvorrichtung erheblich reduziert wird. Eine solche Schaltung hat im Vergleich zu einer herkömmlichen Schweißvorrichtung mit entsprechender Ausgangsleistung einen wesentlich herabgesetzten Energiebedarf. Hierdurch können die immer weiter steigenden Energiekosten erheblich reduziert werden. Dies wirkt sich vor allem auch in größeren Produktionsanlagen aus, in denen eine Vielzahl von Schweiß- oder Lötvorrichtungen parallel zueinander arbeiten. Die Leistungsaufnahme während des Standby-Zustandes kann auf diese Weise auf einen Wert von z.B. unter 10 Watt gesenkt werden. Dies wird auch dadurch möglich, dass eine Abschaltung oder zumindest eine Verbrauchsverringerung sämtlicher externer Komponenten der Schweißvorrichtung erfolgt, d.h. z.B. auch der Lüfter oder die Kühlwasserpumpe werden hinsichtlich der Energieaufnahme optimiert. Hierdurch können die Gesamtkosten für die Schweißvorrichtung in der Produktion entschieden verringert werden. Auch können dadurch die Wartungsintervalle erheblich verlängert werden, da die betroffenen in den Standby-Modus gefahrenen Komponenten vergleichsweise lange Betriebszeiten erreichen.

## Patentansprüche

1. Vorrichtung zum Schweißen oder Löten von Werkstücken mit einem versorgungsspannungsgespeisten Leistungsteil (1) zur Energiebeaufschlagung des Schweiß- oder Lötprozesses (3), einer Steuerungseinheit(6) für das Leistungsteil (1) und mit mindestens einer externen Komponente (4, 5), wobei mindestens ein steuerbares Schaltmittel (8) vorgesehen ist, mit dem die mindestens eine externe Komponente (4, 5) von einem ersten Zustand in einen gegenüber dem ersten Zustand hinsichtlich des Energieverbrauchs reduzierten zweiten Zustand umschaltbar ist, wobei dem mindestens einen Schaltmittel (8) ein Detektormittel (9) zur Erfassung des Verbrauchs einer elektrischen Größe, insbesondere Strom, Spannung oder Leistung, der mindestens einen externen Komponente (4, 5) zugeordnet ist und die Ansteuerung des mindestens einen Schaltmittels (8) beim Erreichen einer vorgebbaren Bedingung bezüglich des Energieverbrauchs der mindestens einen externen Komponente (4, 5) erfolgt, wobei die mindestens eine externe Komponente (4, 5) zur Menge der folgenden externen Komponenten gehört:
Drahtvorschubeinrichtung, Schweißbrenner, Lüfter, Kühlwasserpumpe; **dadurch gekennzeichnet, dass** das mindestens eine Schaltmittel (8) der mindestens einen externen Komponente (4, 5) zugeordnet ist.

2. Vorrichtung nach Anspruch 1, **dadurch gekennzeichnet, dass** dem Detektormittel (9) ein Diskriminatormittel mit einem vorgebbaren Schwellenwert für die elektrische Größe, insbesondere Strom, Spannung oder Leistung, zugeordnet ist.

3. Vorrichtung nach Anspruch 2, **dadurch gekennzeichnet, dass** dem mindestens einen Schaltmittel (8) ein Verzögerungsglied (11) zugeordnet ist, wobei nach Ablauf von dessen Verzögerungszeitdauer (T) nach Erreichen des Schwellenwerts die Betätigung des mindestens einen Schaltmittels erfolgt.

4. Vorrichtung nach Anspruch 3, **dadurch gekennzeichnet, dass** die Verzögerungszeitdauer (T) von einer Bedienungsperson vorgebbar ist.

5. Vorrichtung nach einem der Ansprüche 1-4, **dadurch gekennzeichnet, dass** die Ansteuerung des mindestens einen steuerbaren Schaltmittels (8) zum Umschalten vom ersten Zustand in den zweiten Zustand und/oder zum Umschalten vom zweiten in den ersten Zustand automatisch erfolgt, aber zusätzlich eine manuelle Ansteuerung des mindestens einen steuerbaren Schaltmittels (8) zum Umschalten vom ersten Zustand in den zweiten Zustand und/oder zum Umschalten vom zweiten Zustand in den ersten Zustand möglich ist.

6. Vorrichtung nach Anspruch 5, **dadurch gekennzeichnet, dass** die manuelle Ansteuerung des mindestens einen Schaltmittels(8) zum manuellen Umschalten vom ersten Zustand in den zweiten Zustand und/oder zum manuellen Umschalten vom zweiten Zustand in den ersten Zustand durch einen an der mindestens einer externen Komponente (4, 5) angebrachten Betätigungsschalter (12) erfolgt.

7. Vorrichtung nach einem der Ansprüche 1 bis 6, **dadurch gekennzeichnet, dass** der erste Zustand der Betriebszustand und dass der zweite Zustand der Standby-Modus ist.

8. Vorrichtung nach einem der Ansprüche 1 bis 6, **dadurch gekennzeichnet, dass** der erste Zustand der Betriebszustand und dass der zweite Zustand der abgeschaltete Zustand ist.

9. Vorrichtung nach einem der Ansprüche 1 bis 8 **dadurch gekennzeichnet, dass** dem steuerbaren Schaltmittel (8) ein, insbesondere optisches oder akustisches, Anzeigemittel (10) für den aktuellen Zustand der mindestens einen externen Komponente (4, 5) zugeordnet ist.

10. Verfahren zum Betreiben eines Schweiß- oder Lötgerätes mit einem versorgungsspannungsseitig angeordneten Leistungsteil (1) zur Energiebeaufschlagung des Schweiß- oder Lötprozesses, einer Steuerungseinheit (6) für das Leistungsteil (1) und mit mindestens einer externen Komponente (4, 5), wobei mindestens ein steuerbares Schaltmittel (8) vorgesehen ist, mit dem die mindestens eine externe Komponente (4, 5) von einem ersten Zustand in einen gegenüber dem ersten Zustand hinsichtlich des Energieverbrauchs reduzierten zweiten Zustand umgeschaltet wird, wobei dem mindestens einen Schaltmittel (8) ein Detektormittel (9) zur Erfassung des Verbrauchs einer elektrischen Größe, insbesondere Strom, Spannung oder Leistung, der mindestens einen externen Komponente (4, 5) zugeordnet ist und die Ansteuerung des mindestens einen Schaltmittels (8) beim Erreichen einer vorgebbaren Bedingung bezüglich des Energieverbrauchs der mindestens einen externen Komponente (4, 5) erfolgt, wobei die mindestens eine externe Komponente (4, 5) zur Menge der folgenden externen Komponenten gehört:
Drahtvorschubeinrichtung, Schweißbrenner, Lüfter, Kühlwasserpumpe; **dadurch gekennzeichnet, dass** das mindestens eine Schaltmittel (8) der mindestens einen externen Komponente (4, 5) zugeordnet ist.

11. Verfahren nach Anspruch 10, **dadurch gekennzeichnet, dass** die Umschaltung der Zustände für jede Komponente einzeln erfolgt.

12. Verfahren nach Anspruch 10, **dadurch gekennzeichnet, dass** die Umschaltung der Zustände für alle Komponente gemeinsam erfolgt.

13. Verfahren nach Anspruch 10, **dadurch gekennzeichnet, dass** die Umschaltung der Zustände für Gruppen von Komponenten gemeinsam erfolgt.

14. Verfahren nach Anspruch 10, **dadurch gekennzeichnet, dass** die Umschaltung der Zustände für einzelne Baugruppen einer Komponente einzeln oder gemeinsam erfolgt.

## Claims

1. A device for welding or soldering workpieces with a supply-voltage fed power element (1) for loading the welding or soldering process (3) with energy, a control unit (6) for the power element (1) and with at least one external component (4, 5), wherein at least one controllable switching means (8) is provided, with which the at least one external component (4, 5) can be switched from a first state into a second state which has a reduced energy consumption compared to the first state, wherein a detector means (9) for detecting the consumption of an electric variable, particularly current, voltage or power of the at least one external component (4, 5) is assigned to the at least one switching means (8) and the control of the at least one switching means (8) takes place when a predeterminable condition relating to the energy consumption of the at least one external component (4, 5) is reached, wherein the at least one external component (4, 5) is part of the quantity of the following external components: wire feed apparatus, welding torch, fan, cooling-water pump; **characterised in that** the at least one switching means (8) is assigned to the at least one external component (4, 5).

2. The device according to Claim 1, **characterised in that** a discriminator means with a predeterminable threshold value for the electric variable, particularly current, voltage or power, is assigned to the detector means (9).

3. The device according to Claim 2, **characterised in that** a delay element (11) is assigned to the at least one switching means (8), wherein the actuation of the at least one switching means takes place after the expiry of the delay time (T) thereof after the reaching of the threshold value.

4. The device according to Claim 3, **characterised in that** the delay time (T) can be predetermined by an operator.

5. The device according to one of Claims 1-4, **characterised in that** the control of the at least one controllable switching means (8) for switching from the first state into the second state and/or for switching from the second into the first state takes place automatically, but a manual control of the at least one controllable switching means (8) for switching from the first state into the second state and/or for switching from the second state into the first state is additionally possible.

6. The device according to Claim 5, **characterised in that** the manual control of the at least one switching means (8) for manually switching from the first state into the second state and/or for manually switching from the second state into the first state takes place by means of an actuation switch (12) attached on the at least one external component (4, 5).

7. The device according to one of Claims 1 to 6, **characterised in that** the first state is the operating state and **in that** the second state is the standby mode.

8. The device according to one of Claims 1 to 6, **characterised in that** the first state is the operating state and **in that** the second state is the switched-off state.

9. The device according to one of Claims 1 to 8, **characterised in that** an, in particular optical or acoustic indicator (10) for the current state of the at least one external component (4, 5) is assigned to the controllable switching means (8).

10. A method for operating a welding or soldering device with a power element (1) arranged on the supply-voltage side for loading the welding or soldering process with energy, a control unit (6) for the power element (1) and with at least one external component (4, 5), wherein at least one controllable switching means (8) is provided, with which the at least one external component (4, 5) is switched from a first state into a second state which has a reduced energy consumption compared to the first state, wherein a detector means (9) for detecting the consumption of an electric variable, particularly current, voltage or power of the at least one external component (4, 5) is assigned to the at least one switching means (8) and the control of the at least one switching means (8) takes place when a predeterminable condition relating to the energy consumption of the at least one external component (4, 5) is reached, wherein the at least one external component (4, 5) is part of the quantity of the following external components: wire feed apparatus, welding torch, fan, cooling-water pump; **characterised in that** the at least one switching means (8) is assigned to the at least one external component (4, 5).

11. The method according to Claim 10, **characterised in that** the switching of the states takes place individually for each component.

12. The method according to Claim 10, **characterised in that** the switching of the states takes place together for all components.

13. The method according to Claim 10, **characterised in that** the switching of the states takes place together for groups of components.

14. The method according to Claim 10, **characterised in that** the switching of the states takes place individually or together for individual modules of a component.

## Revendications

1. Dispositif destiné au soudage ou au brasage de pièces avec une partie de puissance (1) alimentée en tension d'alimentation pour l'alimentatiion en énergie du processus de soudage ou brasage (3), une unité de commande (6) pour la partie de puissance (1) et avec au moins un composant externe (4, 5), au moins un moyen de connexion (8) pilotable étant prévu, avec lequel au moins un composant externe (4, 5) peut être commuté d'un premier état dans un deuxième état réduit vis-à-vis du premier état en ce qui concerne la consommation d'énergie, un moyen détecteur (9) pour saisie de la consommation d'une valeur électrique, en particulier de courant, de tension ou de puissance, étant affecté à au moins un moyen de commutation (8) d'au moins un composant externe (4, 5) et l'activation d'au moins un moyen de commutation (8) ayant lieu à l'atteinte d'une condition spécifiable concernant la consommation d'énergie d'au moins un des composants externes (4, 5), selon lequel le, au moins un, composant externe (4, 5) appartient à la quantité des composants externes suivants :
système d'avance de fil, chalumeau de soudage, ventilateur, pompe d'eau de refroidissement **caractérisé en ce que** le au moins un moyen de commutation (8) est affecté à au moins un des composants externes (4, 5).

2. Dispositif selon la revendication 1 **caractérisé en ce qu'**au moyen détecteur (9) est affecté un moyen discriminateur avec une valeur seuil spécifiable pour la valeur électrique, en particulier de courant, de tension ou de puissance.

3. Dispositif selon la revendication 2 **caractérisé en ce qu'**à au moins un moyen de commutation (8) est affecté un élément de retardement (11), l'actionnement d'au moins un moyen de commutation ayant lieu après expiration de la durée de temps de retardement (T) de celui-ci après atteinte de la valeur de seuil.

4. Dispositif selon la revendication 3 **caractérisé en ce que** la durée de temps de retardement (T) est spécifiable par une personne de service.

5. Dispositif selon une quelconque des revendications 1-4 **caractérisé en ce que** l'activation de au moins un moyen de commutation (8) pilotable pour commuter d'un premier état dans un deuxième état et/ou pour commuter du deuxième dans le premier état a lieu automatiquement, mais **en ce qu'**en plus une activation manuelle de au moins un moyen de commutation (8) pilotable pour commuter du premier état dans le deuxième état et/ou pour commuter du deuxième état dans le premier état, est possible

6. Dispositif selon la revendication 5 **caractérisé en ce que** l'activation manuelle de au moins un moyen de commutation (8) pour la commutation manuelle du premier état dans le deuxième état et/ou pour la commutation manuelle du deuxième état dans le premier état a lieu par un commutateur de commande (12) monté sur le, au moins un, composant externe (4, 5).

7. Dispositif selon une quelconque des revendications 1 à 6 **caractérisé en ce que** le premier état est l'état de fonctionnement et **en ce que** le deuxième état est le mode d'attente.

8. Dispositif selon une quelconque des revendications 1 à 6 **caractérisé en ce que** le premier état est l'état de fonctionnement et **en ce que** le deuxième état est l'état déconnecté.

9. Dispositif selon une quelconque des revendications 1 à 8 **caractérisé en ce qu'**au moyen de commutation (8) pilotable est affecté un moyen d'indication (10), en particulier optique ou acoustique, pour l'état actuel d'au moins un composant externe (4, 5).

10. Procédé pour utiliser un appareil de soudage ou de brasage avec une partie de puissance (1) disposée du côté de la tension d'alimentation pour l'alimentation en énergie du processus de soudage ou de brasage, une unité de commande (6) pour la partie de puissance (1) et avec le, au moins un, composant externe (4, 5), au moins un moyen de commutation (8) pilotable étant prévu, avec lequel le, au moins un, composant externe (4, 5) peut être commuté d'un premier état dans un deuxième état réduit vis-à-vis du premier état en ce qui concerne la consommation d'énergie, un moyen détecteur (9) pour saisie de la consommation d'une valeur électrique, en particulier de courant, de tension ou de puissance, étant affecté à au moins un moyen de commutation (8) de au moins un des composants externes (4, 5) et l'activation d'au moins un moyen de commutation (8) ayant lieu à l'atteinte d'une condition spécifiable concernant la consommation d'énergie d'au moins un des composants externes (4, 5), selon lequel au moins un composant externe (4, 5) appartient à la quantité des composants externes suivants :
système d'avance de fil, chalumeau de soudage, ventilateur, pompe d'eau de refroidissement **caractérisé en ce que** le, au moins un, moyen de commutation (8) est affecté à au moins un composant externe (4, 5).

11. Procédé selon la revendication 10 **caractérisé en ce que** la commutation des états a lieu individuellement pour chaque composant.

12. Procédé selon la revendication 10 **caractérisé en ce que** la commutation des états a lieu simultanément pour tous les états.

13. Procédé selon la revendication 10 **caractérisé en ce que** la commutation des états pour les groupes de composants a lieu simultanément.

14. Procédé selon la revendication 10 **caractérisé en ce que** la commutation des états pour les éléments individuels d'un composant a lieu individuellement ou simultanément.
